# EUROPEAN PATENT APPLICATION

(11) **EP 1 942 034 A1**
(43) Date of publication of application: **09.07.2008**
(21) Application number: 06822043.3
(22) Date of filing: 23.10.2006
(51) Int. Cl.: B60R 21/20, B60N 2/42, B60R 21/02

(54) **OCCUPANT RESTRAINT DEVICE AND SEAT**

(30) Priority: 26.10.2005 JP 2005311429
(71) Applicant: TAKATA CORPORATION, Minato-ku, Tokyo 106-8510 (JP)
(72) Inventor: KUMAGAI, Masayoshi, Tokyo 106-8510 (JP)
(74) Representative: Vossius & Partner
(86) International application number: PCT/JP2006/321023
(87) International publication number: WO 2007/049536

(57) **Abstract**

An occupant restraining apparatus 10 that provides a high degree of freedom in the arrangement of a bag and a gas generator includes an inflatable bag 12 for pressing a front portion of the seat cushion from below and a gas generator 14 for inflating the bag 12. The bag 12 is stored in a retainer 16 in a folded state. The gas generator 14 is disposed at an intermediate position of the retainer 16 in the front-rear direction thereof. The retainer 16 has a space in each of a region in front of the gas generator 14 and a region behind the gas generator 14. The gas generator 14 may also be disposed in a front area or a rear area of the retainer 16.

## Description

### Technical Field

The present invention relates to occupant restraining apparatuses for restraining occupants in seats of a vehicle, such as an automobile, when the vehicle collides. More particularly, the present invention relates to an occupant restraining apparatus for restraining a waist of an occupant to prevent the occupant's body from moving forward and downward when a front collision occurs. In addition, the present invention also relates to a seat provided with the occupant restraining apparatus.

### Background Art

An occupant restraining apparatus that prevents a submarine phenomenon, in which an occupant wearing a seatbelt moves through a space below a lap belt when a front collision occurs, is known as a system for restraining an occupant of an automobile in case of a collision. For example, Japanese Unexamined Patent Application Publication No. 10-217818 describes an occupant restraining apparatus including an inflatable bag disposed between a seat cushion and a seat pan. When the vehicle collides, the bag is inflated so as to push a front portion of the seat cushion upward.

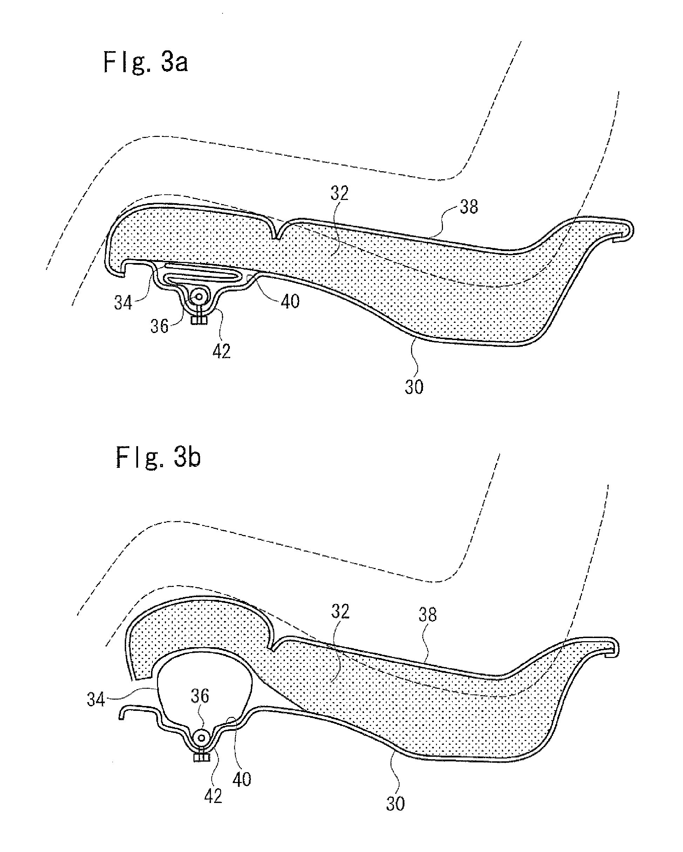

Figs. 3a and 3b are longitudinal sectional views of the occupant restraining apparatus described in the above-mentioned publication taken along a line extending in the front-rear direction of a seat. Fig. 3a shows the state in which the bag is not inflated and Fig. 3b shows the state in which the bag is inflated. In a front section of the seat, an airbag 34 is disposed between a seat pan 30 and a seat cushion 32. The airbag 34 extends in the left-right direction, that is, the width direction of the seat and is inflatable by a gas generator 36. The airbag 34 is disposed above the gas generator 36 in a folded state. The upper surface of the seat cushion 32 is covered with a trim cover 38, and the occupant sits on the trim cover 38.

When the vehicle collides and the gas generator 36 is activated, the airbag 34 is inflated. Accordingly, a front portion of the seat pad 32 is pushed upward or is increased in density by being pressed from below. As a result, forward movement of the occupant's body is prevented or suppressed.
Patent Document 1: Japanese Unexamined Patent Application Publication No. 10-217818

In the occupant restraining apparatus according to Japanese Unexamined Patent Application Publication No. 10-217818, the seat pan 30 has a recess 40, and the recess 40 has a dent 42 at the bottom. The inflator 36 is disposed in the dent 42, and the airbag 34 is disposed in the recess 40.

In such a structure, the structure of the seat pan is complex, and therefore the freedom in design is limited.

### Disclosure of Invention

An object of the present invention is to provide an occupant restraining apparatus that provides a high degree of freedom in the arrangement of a bag and a gas generator and a seat provided with the occupant restraining apparatus.

According to a first aspect of the present invention, an occupant restraining apparatus includes an inflatable bag for pressing a seat cushion from below and a gas generator for inflating the bag in case of vehicle emergency. The bag and the gas generator are disposed in a storage section provided under the seat cushion. The bag storage section has a space capable of storing the bag in at least one of a region in front of the gas generator and a region behind the gas generator, and the bag is stored in the space in a folded state.

The bag may be folded in a roll style, an accordion style, or a combination thereof.

The space may be provided in each of the regions in front of and behind the gas generator, and each space may store a portion of the bag.

The space may also be provided in only one of the regions in front of and behind the gas generator.

According to a second aspect of the present invention, a seat includes a seat cushion and the occupant restraining apparatus according to the first aspect.

In the occupant restraining apparatus according to the present invention, the space for storing the bag is provided in at least one of the region in front of the gas generator and the region behind the gas generator in the bag storage section.

According to the present invention, the gas generator may be disposed at an intermediate position of the storage section in the front-rear direction thereof, and the bag may be stored in the regions in front of and behind the gas generator. In such a structure, when the gas generator is activated, the bag is inflated substantially vertically upward.

According to the present invention, the gas generator may be disposed in a front area of the storage section and the bag may be disposed in a rear area of the storage section. In such a case, when the gas generator is activated, the bag is inflated relatively rearward.

According to the present invention, the gas generator may be disposed in a rear area of the storage section and the bag may be disposed in a front area of the storage section. In such a case, when the gas generator is activated, the bag is inflated relatively forward.

According to the above-described structure, the present invention provides a high degree of freedom in the arrangement of the gas generator and the bag. In addition, the direction of inflation of the bag can be controlled.

The inflation characteristics of the bag can also be controlled by folding the bag in a roll style or an accordion style.

### Brief Description of the Drawings

[Fig. 1] Fig. 1 is a perspective view of a seat frame including an occupant restraining apparatus according to an embodiment of the present invention.
[Fig. 2] Fig. 2 is a sectional view of Fig. 1 taken along line II-II.
[Fig. 3] Figs. 3a and 3b are sectional views of a known occupant restraining apparatus.

### Detailed Description of the Invention

An embodiment of the present invention will be described below with reference to the accompanying drawings.

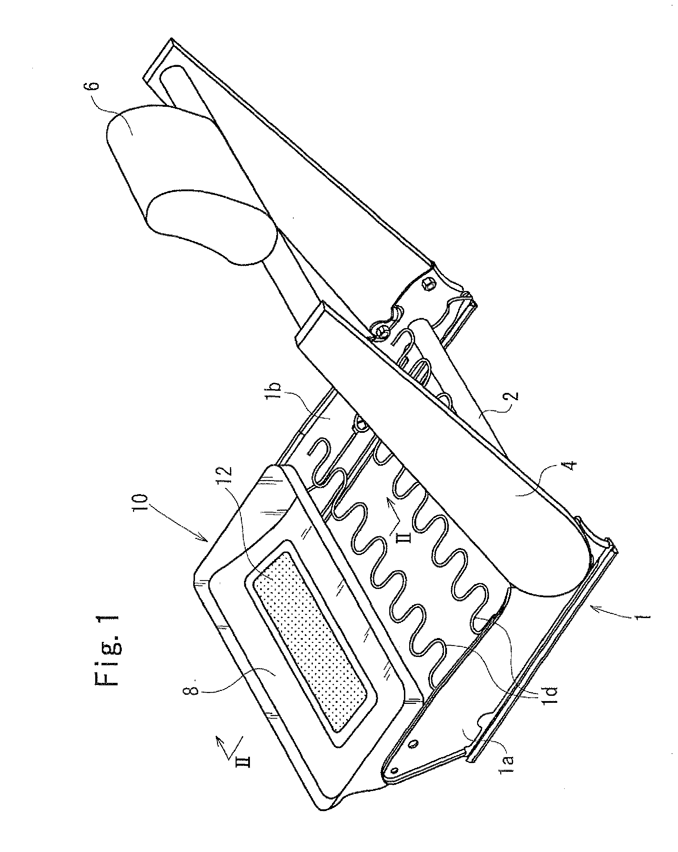

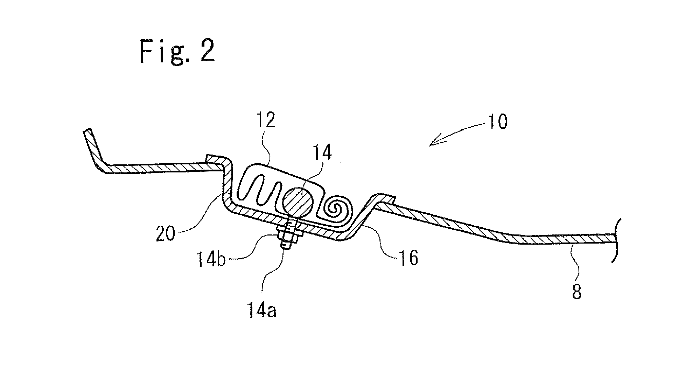

Fig. 1 is a perspective view of a seat frame of a seat including an occupant restraining apparatus according to an embodiment of the present invention, and Fig. 2 is a sectional view of Fig. 1 taken along line II-II.

A frame forming a seat of an automobile includes a base frame 1 and a back frame 4 that is rotatably connected to the base frame 1 with a support shaft 2 and a reclining device (not shown) provided therebetween. A headrest 6 is attached to an upper portion of the back frame 4. The base frame 1 includes left and right side frames 1a and 1b, and a seat pan 8 is provided so as to extend between front portions of the side frames 1a and 1b.

Although not shown in the figures, a seat cushion and a seat back made of urethane or the like are attached to the base frame 1 and the back frame 4, respectively. The seat pan 8 is disposed under a front portion of the seat cushion. In Fig. 1, reference numeral 1d denotes springs for supporting the seat cushion.

An occupant restraining apparatus 10 includes an inflatable bag 12 for pressing the front portion of the seat cushion from below and a gas generator 14 for inflating the bag 12.

In this state, the seat pan 8 has a retainer 16 that is shaped like a container with an open top and that extends in the width direction (left-right direction) of the seat. In a normal state (when there is no emergency like a vehicle collision), the bag 12 is stored in the retainer 16 in a folded state. The bag 12 extends in the left-right direction in the retainer 16.

In this state, the gas generator 14, which is rod-shaped, is disposed in the bag 12. The gas generator 14 is disposed so as to extend in the width direction of the vehicle. The gas generator 14 has a gas outlet (not shown) in a peripheral surface thereof, and gas is ejected in the radial direction from the gas outlet.

The gas generator 14 has stud bolts 14a that are formed so as to project therefrom. The stud bolts 14a extend through the bottom surface of the bag 12 and the bottom surface of the retainer 16 and project downward from the retainer 16. The stud bolts 14a are fastened to the retainer 16 with nuts 14b. Thus, the gas generator 14 and the bag 12 are connected to the retainer 16.

In this embodiment, the stud bolts 14a are arranged in the longitudinal direction of the gas generator 14 with intervals therebetween.

In this embodiment, the gas generator 14 is disposed at an intermediate position of the retainer 16 in the front-rear direction thereof. The retainer 16 has a space in each of regions in front of and behind the gas generator 14. A front portion of the bag 12 is folded in an accordion style and is stored in the front space, and a rear portion of the bag 12 is folded in a roll style and is stored in the rear space.

In the occupant restraining apparatus 10 having the above-described structure, if a front collision of the automobile is detected, the gas generator 14 is activated and ejects gas. Accordingly, the bag 12 is inflated upward by the gas ejected from the gas generator 14. As a result, the front portion of the seat cushion is pushed upward or is increased in density by being pressed from below, so that forward movement of the occupant's waist is prevented or suppressed.

In this embodiment, the folded bag 12 is stored in the regions in front of and behind the gas generator 14 that is disposed in the retainer 16. Therefore, when the gas generator 14 is activated, the bag 12 is inflated substantially vertically upward.

However, according to the present invention, the gas generator 14 may also be disposed in a front area of the retainer 16 and the folded bag 12 may be stored only in a space behind the gas generator 14. In such a case, the bag is inflated relatively rearward.

Alternatively, the gas generator 14 may also be disposed in a rear area of the retainer 16 and the folded bag 12 may be stored only in a space in front of the gas generator 14. In such a case, the bag 12 is inflated relatively frontward.

The above-described bag 12 may also be folded only in the accordion style or the roll style. In addition, in Figs. 1 and 2, the front portion of the bag 12 may be folded in the roll style and the rear portion of the bag 12 may be folded in the accordion style.

As described above, the present invention provides a high degree of freedom in the arrangement of the gas generator and the bag. In addition, the present invention also provides a high degree of freedom in the folding style.

In the present invention, if the length of the retainer 16 is smaller than the longitudinal length of the bag 12, the longitudinal ends of the bag 12 are preferably folded so that the longitudinal length of the folded bag matches that of the retainer 16. In such a case, the longitudinal ends of the bag are preferably folded after the front and rear portions of the bag 12 are folded in the accordion style and/or the roll style.

According to the present invention, instead of placing the container-shaped retainer for storing the folded bag in the seat pan, the seat pan 8 may be formed to have a recess in the top surface thereof so that the bag 12 and the gas generator 14 can be placed in the recess.

The above-described embodiment is an exemplary embodiment of the present invention, and the present invention is not limited to the above-described embodiment.
Although the present invention has been described in detail with reference to the exemplary embodiment, it is to be clearly understood by those skilled in the art that various modifications can be made within the spirit and scope of the present invention.
This application is based on Japanese Patent Application No. 2005-311429 filed October 26, 2005, which is hereby incorporated by reference herein in its entirety.

## Claims

1. An occupant restraining apparatus comprising:
an inflatable bag for pressing a seat cushion from below; and
a gas generator for inflating the bag in case of vehicle emergency,
wherein the bag and the gas generator are disposed in a storage section provided under the seat cushion,
wherein the bag storage section has a space capable of storing the bag in at least one of a region in front of the gas generator and a region behind the gas generator, and
wherein at least a portion of the bag is stored in the space in a folded state.

2. The occupant restraining apparatus according to claim 1, wherein the bag is folded in a roll style, an accordion style, or a combination thereof.

3. The occupant restraining apparatus according to claim 1, wherein the space is provided in each of the regions in front of and behind the gas generator, each space storing a portion of the bag.

4. The occupant restraining apparatus according to claim 1, wherein the space is provided in only one of the regions in front of and behind the gas generator.

5. The occupant restraining apparatus according to claim 1, wherein the storage section includes a recess of a retainer attached to a seat pan of a seat.

6. The occupant restraining apparatus according to claim 5, wherein the retainer is shaped like a container with an open top.

7. The occupant restraining apparatus according to claim 1, wherein the gas generator is disposed inside the bag.

8. A seat of a vehicle comprising a seat cushion and the occupant restraining apparatus according to claim 1.
